# EUROPÄISCHE PATENTANMELDUNG

(11) **EP 4 488 203 A1**
(43) Veröffentlichungstag der Anmeldung: **08.01.2025**
(21) Anmeldenummer: 23183549.7
(22) Anmeldetag: 05.07.2023
(51) Int. Cl.: B65G 41/00, B65B 59/04, B65B 65/02

(54) **KOMBINATION EINER VERPACKUNGSANLAGE MIT EINER DIESER ZUORDENBAREN FUNKTIONSVORRICHTUNG**

(71) Anmelder: SOMIC Verpackungsmaschinen GmbH & Co. KG, 83123 Amerang (DE)
(72) Erfinder: DECHANT, Michael, 83533 Edling (DE); LIPP, Josef, 83561 Ramerberg (DE)
(74) Vertreter: Weickmann & Weickmann PartmbB

(57) **Zusammenfassung**

Die Erfindung betrifft eine Kombination (100) einer Verpackungsanlage (102) mit einer dieser zuordenbaren Funktionsvorrichtung (104), wobei die Verpackungsanlage (102) wenigstens ein Antriebsübertragungselement (110) mit einer Verzahnung (110a) und die Funktionsvorrichtung (104) wenigstens ein Antriebsübertragungsgegenelement (112) mit einer Gegenverzahnung (112a) aufweist, welche in einem betriebsmäßig kombinierten Zustand von Verpackungsanlage (102) und Funktionsvorrichtung (104) mit der Außenverzahnung (110) des Antriebsübertragungselements (110) kämmt. Erfindungsgemäß sind sowohl die Verzahnung (110a) des Antriebsübertragungselements (110) als auch die Gegenverzahnung (112a) des Antriebsübertragungsgegenelements (112) Außenverzahnungen, wobei das Antriebsübertragungsgegenelement (112) in dem betriebsmäßig kombinierten Zustand von Verpackungsanlage (102) und Funktionsvorrichtung (104) bezogen auf eine Drehachse des Antriebsübertragungselements (110) radial außerhalb des Antriebsübertragungselements (110) angeordnet ist, vorzugsweise radial oberhalb des Antriebsübertragungselements (110).

## Beschreibung

Die Erfindung betrifft eine Kombination einer Verpackungsanlage mit einer der Verpackungsanlage zuordenbaren Funktionsvorrichtung, wobei die Verpackungsanlage wenigstens ein drehantreibendes Antriebsübertragungselement mit einer Verzahnung und die Funktionsvorrichtung wenigstens ein Antriebsübertragungsgegenelement mit einer Gegenverzahnung aufweist, welche dazu ausgebildet und bestimmt ist, in einem betriebsmäßig kombinierten Zustand von Verpackungsanlage und Funktionsvorrichtung mit der Verzahnung des Antriebsübertragungselements in Antriebsübertragungseingriff zu treten.

Die Kombination von Verpackungsanlage und Funktionsvorrichtung wird zur Erleichterung des Verständnisses nachstehend sowohl mit Bezug auf den Stand der Technik als auch im Zusammenhang mit der vorliegenden Erfindung am Beispiel einer Sammlervorrichtung als Funktionsvorrichtung erläutert werden. Es sei jedoch betont, dass die Erfindung hierauf nicht beschränkt ist. Vielmehr können auch andere Arten von Funktionsvorrichtungen zum Einsatz kommen, die zudem nicht nur am Zulauf der Verpackungsanlage angeordnet zu sein brauchen, sondern beispielsweise auch am Ablauf der Verpackungsanlage angeordnet sein können.

Sammlervorrichtungen haben die Aufgabe, der Verpackungsanlage von einer Fördervorrichtung zugeführte Produkte zu sammeln und in einer Konfiguration zu gruppieren oder zumindest vorzugruppieren, in der sie von der Verpackungsanlage weiterbehandelt, insbesondere verpackt, werden können. Da der genaue Aufbau der Sammlervorrichtung von der jeweiligen Produktart, insbesondere der Größe und Gestalt der Produkte, abhängt, ist es im Stand der Technik üblich, eine Mehrzahl unterschiedlich gestalteter Sammlervorrichtungen vorzuhalten und in Abhängigkeit vom jeweiligen Anwendungsfall die jeweils geeignete Sammlervorrichtung mit der Verpackungsanlage zu kombinieren. Hierbei ist es erforderlich, die Sammlervorrichtung mit einem von der Verpackungsanlage bereitgestellten Antriebsstrang zu verbinden. Hierzu wird üblicherweise die auf einem Transportwagen gelagerte Sammlervorrichtung mittels des Transportwagens derart an die Verpackungsanlage herangefahren, dass wenigstens ein eine Innenverzahnung aufweisendes Zahnrad (Antriebsübertragungsgegenelement) der Sammlervorrichtung in axialer Richtung seiner Drehachse auf ein außenverzahntes Zahnrad (Antriebsübertragungselements) der Verpackungsanlage aufgesteckt werden kann.

Hierbei kann es aus den unterschiedlichsten Gründen zu Problemen kommen, insbesondere wenn die Achsen der Zahnräder von Sammlervorrichtung und Verpackungsanlage nicht mit ausreichender Präzision zueinander ausgerichtet sind. Dadurch können in den zusammenwirkenden Komponenten von Sammlervorrichtung und Verpackungsanlage so hohe Reibungskräfte entstehen, dass die Sammlervorrichtung nur unter großer Anstrengung, gegebenenfalls sogar gar nicht, mit der Verpackungsanlage kombiniert werden kann. Gründe hierfür können Fertigungstoleranzen, eine unzureichende Ausrichtung der Sammlervorrichtung auf dem Transportwagen, ein unebener Untergrund, auf dem der Transportwagen aufsteht, oder dergleichen mehr sein.

Es ist daher Aufgabe der vorliegenden Erfindung, diese Probleme zu vermeiden, so dass der Wechsel der Sammlervorrichtung einfacher und zuverlässiger vonstattengehen kann.

Diese Aufgabe wird erfindungsgemäß durch eine Kombination von Verpackungsanlage und Funktionsvorrichtung der eingangs genannten Art gelöst, bei welcher sowohl die Verzahnung des Antriebsübertragungselements als auch die Gegenverzahnung des Antriebsübertragungsgegenelements Außenverzahnungen sind, wobei das Antriebsübertragungsgegenelement in dem betriebsmäßig kombinierten Zustand von Verpackungsanlage und Funktionsvorrichtung bezogen auf eine Drehachse des Antriebsübertragungselements radial außerhalb des Antriebsübertragungselements angeordnet ist, vorzugsweise radial oberhalb des Antriebsübertragungselements.

Bei der erfindungsgemäßen Kombination werden das Antriebsübertragungselement und das Antriebsübertragungsgegenelement bezogen auf ihre Drehachsen nicht mehr wie im Stand der Technik üblich in axialer Richtung zusammengeführt. Vielmehr wird das Antriebsübertragungsgegenelement mit seiner Außenverzahnung in radialer Richtung an das Antriebsübertragungselement herangeführt, vorzugsweise von oben. Hierbei tauchen die in Umfangsrichtung schmalen Zahnspitzen der Verzahnungen der beiden Elemente in die in Umfangsrichtung weiten Zwischenräume zwischen benachbarten Zahnspitzen ein. Im weiteren Verlauf des Zusammenführens wirken dann die Zahnflanken der Zähne als Einweisungsschrägen, die das Zusammenführen der Verzahnungen erleichtern. Insgesamt ergibt sich somit ein gegenüber Ungenauigkeiten jedweder Art toleranter Ablauf.

Sollte in seltenen Ausnahmefällen beim Heranführen der Funktionsvorrichtung an die Verpackungsanlage einmal Zahnstirnfläche auf Zahnstirnfläche zu liegen kommen, so kann dies ohne Weiteres problemlos durch geringfügiges Drehen des Antriebsübertragungsgegenelements der Funktionsvorrichtung behoben werden.

Genau die gleichen Vorteile können auch dann erzielt werden, wenn die eine Verzahnung, nämlich die Verzahnung des Antriebsübertragungselements oder die Gegenverzahnung des Antriebsübertragungsgegenelements, eine Außenverzahnung ist, während die jeweils andere Verzahnung, nämlich die Gegenverzahnung des Antriebsübertragungsgegenelements oder die Verzahnung des Antriebsübertragungselements, eine Innenverzahnung ist, und zwar dann, wenn die Drehachse des Antriebsübertragungsgegenelements in dem betriebsmäßig kombinierten Zustand von Verpackungsanlage und Funktionsvorrichtung einen vorbestimmten Abstand von der Drehachse des Antriebsübertragungselements aufweist, vorzugsweise unterhalb der Drehachse des Antriebsübertragungselements angeordnet ist. Daher betrifft die Erfindung gemäß einem weiteren Aspekt auch eine derartige Konstellation.

Zu dieser Konstellation ist darauf hinzuweisen, dass der vorbestimmte Abstand der beiden Drehachsen im betriebsmäßig kombinierten Zustand von Verpackungsanlage und Funktionsvorrichtung vorteilhafterweise größer ist als die größere Höhe der Zähne von Verzahnung und Gegenverzahnung. Dies erleichtert das Annähern von Verzahnung und Gegenverzahnung aneinander, bevor sie in radialer Richtung zusammengeführt werden.

Beide erfindungsgemäßen Konstellationen beruhen auf dem gleichen erfindungsgemäßen Konzept, nämlich die beiden Verzahnungen seitlich und nicht in axial Richtung aneinander heranzuführen, d.h. in der jeweils vorzugsweisen Ausgestaltung die Gegenverzahnung des Antriebsübertragungsgegenelements in die Verzahnung des Antriebsübertragungselements abzusenken.

An dieser Stelle sei darauf hingewiesen, dass das Antriebsübertragungselement und das Antriebsübertragungsgegenelement auch im Zusammenhang mit der vorliegenden Erfindung vorzugsweise als Zahnräder ausgebildet sein können.

Um das Antriebsübertragungselement und das Antriebsübertragungsgegenelement beim Heranführen des Transportwagens an die Verpackungsanlage in Richtung der Heranführbewegung zueinander ausrichten zu können, wird vorgeschlagen, dass die Verpackungsanlage eine im Wesentlichen orthogonal verlaufende Anschlagfläche aufweist, die dazu bestimmt ist, in dem betriebsmäßig kombinierten Zustand von Verpackungsanlage und Funktionsvorrichtung an einer Gegenanschlagfläche der Funktionsvorrichtung anzuliegen.

Um ein derartiges Ausrichten des Antriebsübertragungselements und des Antriebsübertragungsgegenelements auch in einer zweiten Raumrichtung, d.h. zur Heranführrichtung orthogonal verlaufenden Richtung, ermöglichen zu können, kann ferner vorgesehen sein, dass die Verpackungsanlage eine zur Anschlagfläche im Wesentlichen orthogonal verlaufende Führungsfläche aufweist, die dazu bestimmt ist, in dem betriebsmäßig kombinierten Zustand von Verpackungsanlage und Funktionsvorrichtung an einer Gegenführungsfläche der Funktionsvorrichtung anzuliegen. Vorzugsweise kann die zweite Raumrichtung wie die Heranführrichtung ebenfalls im Wesentlichen horizontal, d.h. in Längsrichtung der Verpackungsanlage, verlaufen.

Zur Erleichterung der korrekten Ausrichtung wird vorgeschlagen, dass mindestens zwei Paare derartiger Führungs- und Gegenführungsflächen vorgesehen sind.

In konstruktiv einfacher Weise kann die Führungsfläche von einer Seitenfläche oder alternativ einer oberen bzw. unteren Fläche eines von der Verpackungsanlage abstehenden Trägers gebildet sein. Dieser Träger kann dazu ausgebildet und bestimmt sein, in dem betriebsmäßig kombinierten Zustand von Verpackungsanlage und Funktionsvorrichtung in eine zugeordnete Ausnehmung der Funktionsvorrichtung einzugreifen.

Vorzugsweise ist die Führungsfläche von einer Seitenfläche des Trägers gebildet, so dass die Funktionsvorrichtung in dem betriebsmäßig kombinierten Zustand auf der oberen Fläche des Trägers ruhen kann, der somit ihr Gewicht aufnimmt und abstützt.

Um Kippmomente der Funktionsvorrichtung um eine zur Heranführrichtung im Wesentlichen parallel verlaufende Achse aufnehmen zu können, ist es denkbar, den Träger in Längsrichtung mit einer ausreichenden Erstreckung auszubilden. Alternativ kann die Verpackungsanlage wenigstens zwei Träger aufweisen, die in Längsrichtung in einem vorbestimmten Abstand voneinander angeordnet sind. Zwei aufeinander zu weisende Seitenflächen dieser Träger können dabei zwei Führungsflächen bilden. Zudem können die zugehörigen Gegenführungsflächen an einem Steg der Funktionsvorrichtung ausgebildet sein, der zur Aufnahme der Träger bestimmte Ausnehmungen der Funktionsvorrichtungen voneinander trennt.

Befinden sich die Führungs- und Gegenführungsflächen und die Anschlags- und Gegenanschlagsflächen jeweils in Anlage aneinander, so sind das wenigstens eine Antriebsübertragungselement und das ihm jeweils zugeordnete Antriebsübertragungsgegenelement in zwei Raumrichtungen zueinander ausgerichtet, so dass die Funktionsvorrichtung lediglich noch in der dritten Raumrichtung angenähert zu werden braucht, um die Verzahnungen der beiden Elemente miteinander in kämmenden Eingriff zu bringen.

Die Annäherung in der dritten Raumrichtung erfolgt vorzugsweise durch Absenken in im Wesentlichen vertikaler Richtung. Dies ermöglicht es, das Absenken in konstruktiv einfacher Weise zu vollziehen. Beispielsweise kann das Absenken der Funktionsvorrichtung mittels einer Hubvorrichtung erfolgen, die Teil des nicht zur erfindungsgemäßen Kombination gehörenden Transportwagens ist. Die Hubvorrichtung kann beispielsweise eine von Hand oder motorisch betätigbare Gewindespindel umfassen. An dieser Stelle sei ferner darauf hingewiesen, dass der Transportwagen zudem wenigstens eine Kippvorrichtung aufweisen kann, mittels derer vor der Annäherung an die Verpackungsanlage die horizontale Ausrichtung der Funktionsvorrichtung zumindest in Annäherungsrichtung sichergestellt werden kann.

In Weiterbildung der Erfindung wird vorgeschlagen, dass die Verpackungsanlage wenigstens einen in Höhenrichtung abstehenden Justiervorsprung aufweist, der dazu ausgebildet und bestimmt ist, in dem betriebsmäßig kombinierten Zustand von Verpackungsanlage und Funktionsvorrichtung in eine zugeordnete Justierausnehmung der Funktionsvorrichtung einzugreifen. Das Zusammenwirken des wenigstens einen Justiervorsprungs mit der zugeordneten Justierausnehmung ermöglicht, insbesondere nach dem groben Ausrichten mittels der Anschlags- und Führungsflächen, eine Feinjustierung der Anordnung der Funktionsvorrichtung relativ zur Verpackungsanlage. Der Eingriff zwischen dem wenigstens einen Justiervorsprung und der zugeordneten Justierausnehmung kann im Zuge des Absenkens der Funktionsvorrichtung herbeigeführt werden.

Vorteilhafterweise kann der Justiervorsprung oder wenigstens einer der Justiervorsprünge an seinem freien Ende eine konische Ringfläche aufweisen. Ferner kann der Justiervorsprung oder wenigstens einer der Justiervorsprünge seinem anderen Ende benachbart eine weitere konische Ringfläche aufweisen. Mittels der beiden konischen Ringflächen kann für eine Vor- und eine Endjustierung gesorgt werden.

Um die Funktionsvorrichtung an der Verpackungsanlage festlegen zu können, wird ferner vorgeschlagen, dass der Justiervorsprung oder wenigstens einer der Justiervorsprünge mit einer, vorzugsweise pneumatisch betätigbaren, Spannvorrichtung ausgestattet ist.

Nachzutragen ist noch, dass der Justiervorsprung oder wenigstens einer der Justiervorsprünge an dem Träger oder einem der Träger angeordnet ist.

Die Erfindung wird im Folgenden anhand eines Ausführungsbeispiels mit Bezug auf die begleitenden Zeichnungen näher erläutert werden. Es stellt dar:
- Figur 1: eine perspektivische und teilweise schematisch gehaltene Ansicht einer erfindungsgemäßen Kombination einer Verpackungsanlage und einer Funktionsvorrichtung in einem noch voneinander getrennten Zustand, wobei die Funktionsvorrichtung noch von einem Transportwagen gehalten ist;
- Figur 2: eine perspektivische und teilweise schematisch gehaltene Ansicht der Verpackungsanlage und der Funktionsvorrichtung aus Figur 1 in einem betriebsmäßig miteinander kombinierten Zustand;
- Figur 3: eine vergrößerte perspektivische Ansicht eines Montageabschnitts der Verpackungsanlage, welcher zur Aufnahme der Funktionsvorrichtung dient;
- Figur 4: eine vergrößerte perspektivische Ansicht der Funktionsvorrichtung;

- Figur 5: eine vergrößerte Schnittansicht zur Erläuterung des Aufbaus und der Funktion der Justiervorsprünge;
- Figur 6: eine perspektivische Ansicht des Transportwagens der Figur 1; und
- Figuren 7 und 8: eine schematische Darstellung zur Erläuterung des Zusammen-wirkens von Verzahnung und Gegenverzahnung bei zwei abge-wandelten Ausführungsformen.

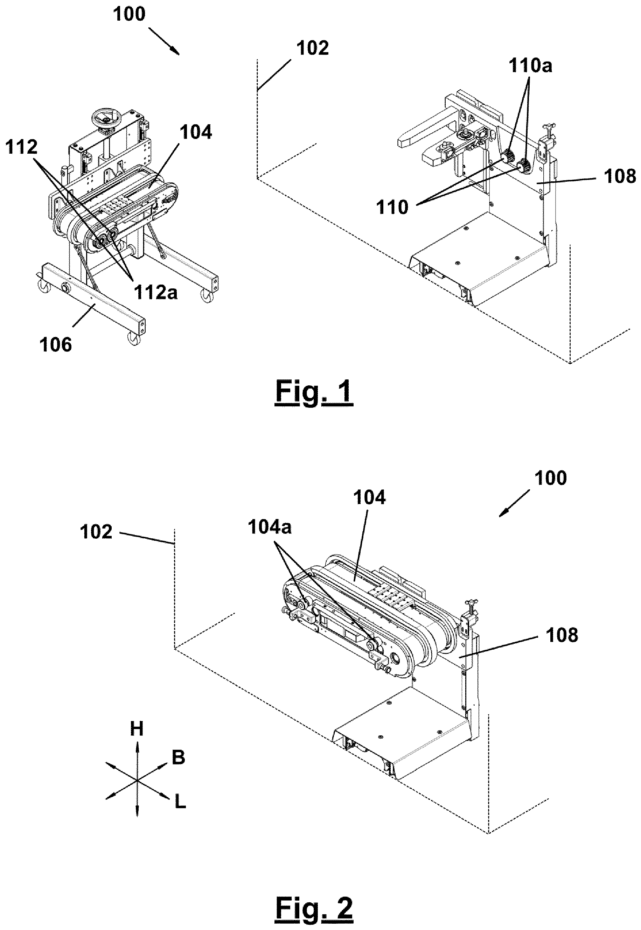

In Figur 1 ist eine erfindungsgemäße Kombination 100 einer Verpackungsanlage 102 und einer Funktionsvorrichtung 104 in einem noch voneinander getrennten Zustand dargestellt. In diesem Zustand ist die Funktionsvorrichtung 104 von einem Transportwagen 106 gehalten. Figur 2 zeigt die Verpackungsanlage 102 und die Funktionsvorrichtung 104 dann in ihrem betriebsmäßig miteinander kombinierten Zustand.

Ein zur Aufnahme der Funktionsvorrichtung 104 bestimmter Montageabschnitt 108 der Verpackungsanlage 102 verfügt über zwei von einem (nicht dargestellten) Antriebsstrang der Verpackungsanlage drehangetriebene Zahnräder 110. Auch die Funktionsvorrichtung 104 verfügt über zwei Zahnräder 112, die im betriebsmäßig kombinierten Zustand von Verpackungsanlage 102 und Funktionsvorrichtung 104 mit den drehangetriebenen Zahnrädern 110 der Verpackungsanlage 102 kämmen, um die (nicht im einzelnen dargestellten) Funktionseinheiten der Funktionsvorrichtung 104 anzutreiben.

Erfindungsgemäß weisen beide Paare von Zahnrädern 110 und 112 Außenverzahnungen 110a und 112a auf, so dass sie in einer bezogen auf ihre Drehachsen radialen Richtung aneinander herangeführt werden können, um den kämmenden Eingriff herzustellen.

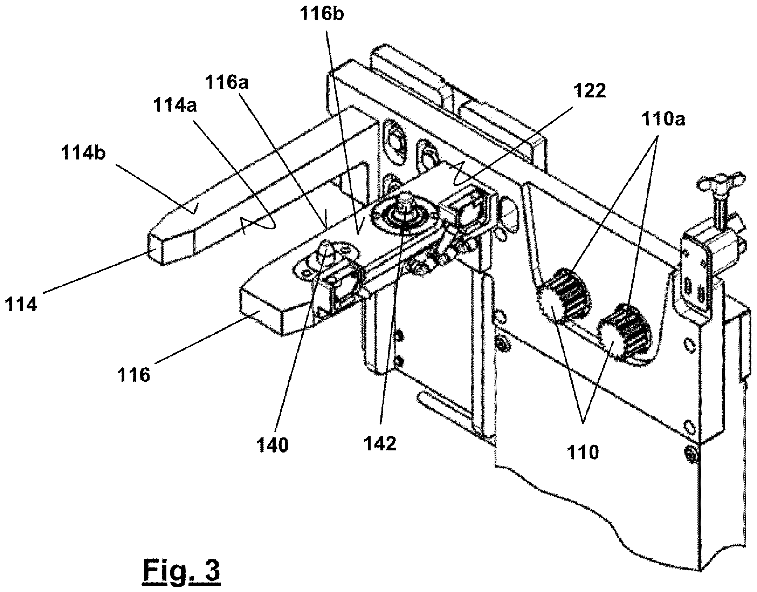

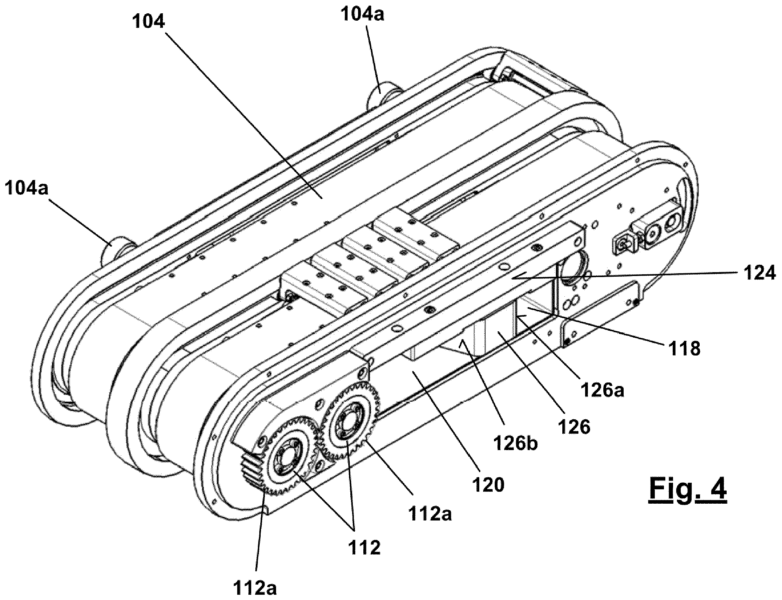

Um die Funktionsvorrichtung 104 und die Verpackungsanlage 102 bzw. deren Montageabschnitt 108 zueinander ausrichten zu können, bevor die Zahnräder 110, 112 miteinander in kämmenden Eingriff treten, weist der Montageabschnitt 108, wie auch in Figur 3 dargestellt ist, zwei Träger 114 und 116 auf. Entsprechend weist die Funktionsvorrichtung 104, wie in Figur 4 dargestellt ist, zwei Ausnehmungen 118 und 120 auf. Im Zuge der Herstellung des betriebsmäßig kombinierten Zustands von Verpackungsanlage 102 und Funktionsvorrichtung 104 wird die Funktionsvorrichtung 104 mit den Ausnehmungen 118, 120 in einer Annäherungsrichtung B (siehe Figur 2) auf die Träger 114, 116 aufgeschoben, bis eine Anschlagfläche 122 des Montageabschnitts 108 und eine Gegenanschlagfläche 124 der Funktionsvorrichtung 104 aneinander anliegen. Diese gegenseitige Anlage zeigt die ordnungsgemäße Ausrichtung von Verpackungsanlage 102 und Funktionsvorrichtung 104 in Annäherungsrichtung B an.

Um die Verpackungsanlage 102 und die Funktionsvorrichtung 104 auch in der zur Annäherungsrichtung B im Wesentlichen orthogonal und ebenfalls im Wesentlichen horizontal verlaufenden Längsrichtung L (siehe Figur 2) zueinander ausrichten zu können, sind die beiden Ausnehmungen 118, 120 der Funktionsvorrichtung 104 durch einen Steg 126 (siehe Figur 4) voneinander getrennt, der zwei Seitenflächen 126a, 126b aufweist. Dieser Steg 126 greift in den zwischen den beiden Trägern 114, 116 vorhandenen Zwischenraum ein und legt sich mit seinen Seitenflächen126a, 126b gegen zwei zugeordnete Seitenflächen 114a, 116a der beiden Träger 114, 116 an. Die Seitenflächen 114a, 126a einerseits und 116a, 126b andererseits bilden somit zwei Paare zusammenwirkender Führungs- und Gegenführungsflächen, die der Ausrichtung in Längsrichtung L dienen.

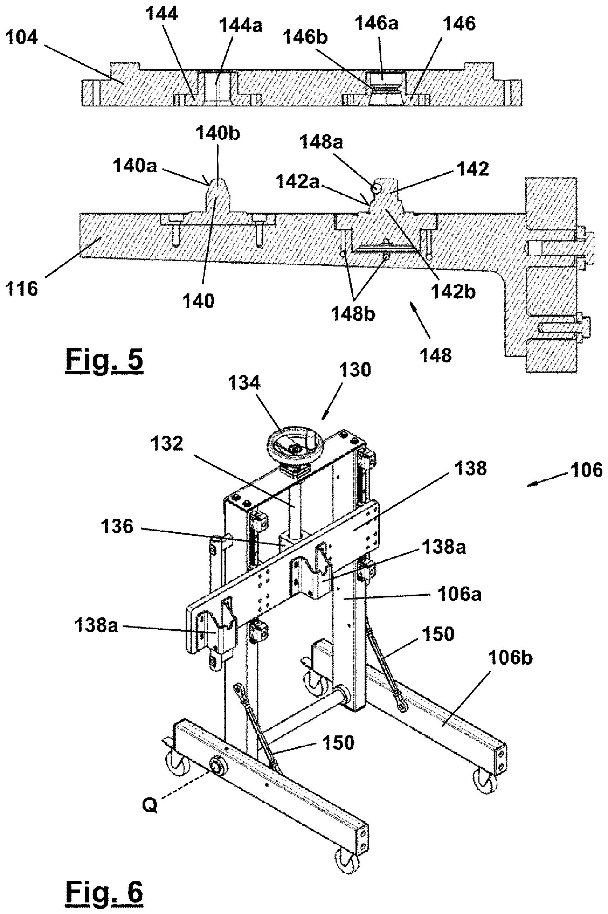

Nach der erfolgten Ausrichtung sowohl in Annäherungsrichtung B als auch in Längsrichtung L braucht die Funktionsvorrichtung 104 nur noch in Höhenrichtung H abgesenkt zu werden, um die Zahnräder 110 und 112 miteinander in Eingriff zu bringen. Hierzu verfügt der Transportwagen 106, wie in Figur 6 dargestellt ist, über eine Hubvorrichtung 130 in Form einer Gewindespindel 132, die mittels einer Handkurbel 134 gedreht werden kann. Die Gewindespindel 132 steht mit einer Mutter 136 in Gewindeeingriff. Auf diese Weise kann eine Halterungsplatte 138, an der die Funktionsvorrichtung 104 gehaltert werden kann, durch Drehen der Handkurbel 134 angehoben und abgesenkt werden.

Liegt die Funktionsvorrichtung 104 auf den oberen Flächen 114b, 116b der Träger 114, 116 auf, stehen die Zahnräder 110, 112 in kämmendem Eingriff miteinander.

Im Zuge des Absenkens der Funktionsvorrichtung 104 kommt es erfindungsgemäß nach der Grobjustierung durch die Anschlagfläche 122 und die Gegenanschlagfläche 124 einerseits und die Führungsflächen 114a, 116a und die Gegenführungsflächen 126a, 126b andererseits auch noch zu einer Feinjustierung der Funktionsvorrichtung 104 relativ zur Verpackungsanlage 102 bzw. deren Montageabschnitt 108. Hierzu sind, wie in den Figuren 3 und 5 dargestellt ist, zwei Justiervorsprünge 140, 142 vorgesehen, die in dem dargestellten Ausführungsbeispiel an dem Träger 116 angeordnet sind.

Der Justiervorsprung 140 ist dazu bestimmt, in eine Ausnehmung 144a eines Einsatzelements 144 der Funktionsvorrichtung 104 einzugreifen. Insbesondere durch den Eingriff einer konischen Ringfläche 140a, die am freien Ende 140b des Justiervorsprungs 140 angeordnet ist, mit dem Einsatzelement 144 kommt es in einer frühen Phase der Absenkbewegung zu einer einleitenden Feinjustierung.

In analoger Weise ist der zweite Justiervorsprung 142 dazu bestimmt, in eine Ausnehmung 146a eines weiteren Einsatzelements 146 der Funktionsvorrichtung 104 einzugreifen. Insbesondere durch den Eingriff einer konischen Ringfläche 142a, die dem Fußende 142b des Justiervorsprungs 142 benachbart vorgesehen ist, mit dem Einsatzelement 146 kommt es in einer späten Phase der Absenkbewegung zu einer abschließenden Feinjustierung.

Grundsätzlich könnten die beiden konischen Ringflächen 140a, 142a auch an ein und demselben Justiervorsprung vorgesehen sein. Bei dem in den Figuren dargestellten Ausführungsbeispiel ist der Justiervorsprung 142 jedoch zusätzlich mit einer pneumatisch betätigbaren Spannvorrichtung 148 ausgebildet. Da derartige Spannvorrichtungen an sich bekannt sind, sind von dieser Spannvorrichtung 148 in Figur 5 lediglich grob schematisch eine der Spannkugeln 148a und die zur Ansteuerung der Spannvorrichtung 148 dienenden Druckluftleitungen 148b dargestellt.

Die Spannkugeln 148a wirken unter dem Einfluss der zugeführten Druckluft mit einem Ringvorsprung 146b des weiteren Einsatzelements 146 zusammen, um die Funktionsvorrichtung 104 beim Spannen zum Träger 116 hin zu ziehen und an diesem zu halten. Im Zuge dieser Spannbewegung kommt es zu der abschließenden Feinjustierung, zu der die konische Ringfläche 142a beiträgt. Daher ist diese an dem gleichen Justiervorsprung 142 vorgesehen wie die Spannvorrichtung 148.

Mit Bezug auf die Figur 6 sei zum Transportwagen 106 noch nachgetragen, dass dieser neben der Hubvorrichtung 130 auch noch längenverstellbare Streben 150 aufweist, mittels derer ein Halterungsaufbau 106a des Transportwagens 106 relativ zum Fahrgestell 106b des Transportwagens 106 um die Achse Q verkippt werden kann. Diese Verstellung eröffnet die Möglichkeit, die am Halterungsaufbau 106a gehalterte Funktionsvorrichtung 104 horizontal auszurichten.

Nachzutragen ist ferner, dass an der Halterungsplatte 138 des Transportwagens 106 Halterungslaschen 138a angebracht sind, in welche die Funktionsvorrichtung 104 mittels Halterungsstutzen 104a (siehe Figuren 2 und 4) eingehängt werden kann.

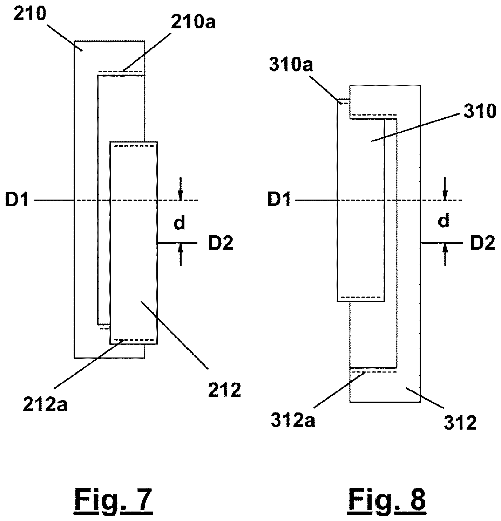

In Figur 7 ist eine abgewandelte Ausführungsform einer Kombination einer Funktionsvorrichtung und einer Verpackungsanlage dargestellt, die aber in weiten Zügen der vorstehend beschriebenen Kombination entspricht. Daher sind in Figur 7 analoge Teile mit den gleichen Bezugszeichen versehen wie in den Figuren 1 bis 6, jedoch vermehrt um die Zahl 100. Darüber hinaus wird die Kombination 200 im Folgenden nur insoweit beschrieben werden, als sie sich von der Kombination 100 gemäß Figuren 1 bis 6 unterscheidet, auf deren Beschreibung hiermit ansonsten verwiesen sei.

Bei der Kombination 200 kommt eine andere Zahnradkonstellation zum Einsatz als bei der Kombination 100. Und zwar weisen die Zahnräder 210 der Verpackungsanlage eine Innenverzahnung 210a auf, während die Zahnräder 212 der Funktionsvorrichtung eine Außenverzahnung 212a aufweisen. Wurden die Zahnräder 212 mit ihrer Außenverzahnung 212a in die Innenverzahnung 210a der Zahnräder 210 abgesenkt, weisen die beiden Drehachsen D1 und D2 voneinander einen Abstand d auf, der größer ist als die Höhe der Zähne von Verzahnung 210a und Gegenverzahnung 212a.

In Figur 8 ist eine weitere abgewandelte Ausführungsform einer Kombination einer Funktionsvorrichtung und einer Verpackungsanlage dargestellt, die aber in weiten Zügen der Kombination 200 der Figur 7 entspricht. Daher sind in Figur 8 analoge Teile mit den gleichen Bezugszeichen versehen wie in Figur 7, jedoch vermehrt um die Zahl 100, d.h. im Vergleich zu den Figuren 1 bis 6 vermehrt um die Zahl 200. Darüber hinaus wird die Kombination 300 im Folgenden nur insoweit beschrieben werden, als sie sich von der Kombination 200 gemäß Figur 7 unterscheidet, auf deren Beschreibung hiermit ansonsten verwiesen sei.

Bei der Kombination 300 wurde lediglich die Außen- bzw. Innenverzahnungseigenschaft der Zahnräder 310, 312 vertauscht. Und zwar weisen die Zahnräder 310 der Verpackungsanlage eine Außenverzahnung 310a auf, während die Zahnräder 312 der Funktionsvorrichtung eine Innenverzahnung 312a aufweisen. Wurden die Zahnräder 312 mit ihrer Innenverzahnung 312a auf die Außenverzahnung 310a der Zahnräder 310 abgesenkt, weisen die beiden Drehachsen D1 und D2 voneinander jedoch wiederum einen Abstand d auf, der größer ist als die Höhe der Zähne von Verzahnung 310a und Gegenverzahnung 312a.

## Patentansprüche

1. Kombination (100) einer Verpackungsanlage (102) mit einer der Verpackungsanlage (102) zuordenbaren Funktionsvorrichtung (104),
wobei die Verpackungsanlage (102) wenigstens ein drehantreibendes Antriebsübertragungselement (110) mit einer Verzahnung (110a) und die Funktionsvorrichtung (104) wenigstens ein Antriebsübertragungsgegenelement (112) mit einer Gegenverzahnung (112a) aufweist, welche dazu ausgebildet und bestimmt ist, in einem betriebsmäßig kombinierten Zustand von Verpackungsanlage (102) und Funktionsvorrichtung (104) mit der Verzahnung (110) des Antriebsübertragungselements (110) in Antriebsübertragungseingriff zu treten,
**dadurch gekennzeichnet, dass**
entweder sowohl die Verzahnung (110a) des Antriebsübertragungselements (110) als auch die Gegenverzahnung (112a) des Antriebsübertragungsgegenelements (112) Außenverzahnungen sind, wobei das Antriebsübertragungsgegenelement (112) in dem betriebsmäßig kombinierten Zustand von Verpackungsanlage (102) und Funktionsvorrichtung (104) bezogen auf eine Drehachse des Antriebsübertragungselements (110) radial außerhalb des Antriebsübertragungselements (110) angeordnet ist, vorzugsweise radial oberhalb des Antriebsübertragungselements (110), oder die eine Verzahnung (212a, 310a), nämlich die Verzahnung (310a) des Antriebsübertragungselements (310) oder die Gegenverzahnung (212a) des Antriebsübertragungsgegenelements (212), eine Außenverzahnung ist, während die jeweils andere Verzahnung (210a, 312a), nämlich die Gegenverzahnung (312a) des Antriebsübertragungsgegenelements (312) oder die Verzahnung (210a) des Antriebsübertragungselements (210), eine Innenverzahnung ist, wobei die Drehachse (D2) des Antriebsübertragungsgegenelements in dem betriebsmäßig kombinierten Zustand von Verpackungsanlage und Funktionsvorrichtung einen vorbestimmten Abstand (d) von der Drehachse (D1) des Antriebsübertragungselements aufweist, vorzugsweise unterhalb der Drehachse des Antriebsübertragungselements angeordnet ist.

2. Kombination nach Anspruch 1,
**dadurch gekennzeichnet, dass** die Verpackungsanlage (102) eine im Wesentlichen orthogonal verlaufende Anschlagfläche (122) aufweist, die dazu bestimmt ist, in dem betriebsmäßig kombinierten Zustand von Verpackungsanlage (102) und Funktionsvorrichtung (104) an einer Gegenanschlagfläche (124) der Funktionsvorrichtung (104) anzuliegen.

3. Kombination nach Anspruch 2,
**dadurch gekennzeichnet, dass** die Verpackungsanlage (102) eine zur Anschlagfläche (122) im Wesentlichen orthogonal verlaufende Führungsfläche (114a, 116a) aufweist, die dazu bestimmt ist, in dem betriebsmäßig kombinierten Zustand von Verpackungsanlage (102) und Funktionsvorrichtung (104) an einer Gegenführungsfläche (126a, 126b) der Funktionsvorrichtung (104) anzuliegen.

4. Kombination nach Anspruch 3,
**dadurch gekennzeichnet, dass** mindestens zwei Paare (114a/126a, 116a/126b) derartiger Führungs- und Gegenführungsflächen (114a, 116a, 126a, 126b) vorgesehen sind.

5. Kombination nach Anspruch 3 oder 4,
**dadurch gekennzeichnet, dass** die Führungsfläche (114a, 116a) von einer Seitenfläche oder einer oberen Fläche oder einer unteren Fläche eines von der Verpackungsanlage (102) abstehenden Trägers (114, 116) gebildet ist.

6. Kombination nach Anspruch 5,
**dadurch gekennzeichnet, dass** der Träger (114, 116) dazu ausgebildet und bestimmt ist, in dem betriebsmäßig kombinierten Zustand von Verpackungsanlage (102) und Funktionsvorrichtung (104) in eine zugeordnete Ausnehmung (118, 120) der Funktionsvorrichtung (104) einzugreifen.

7. Kombination nach Anspruch 5 oder 6,
**dadurch gekennzeichnet, dass** die Verpackungsanlage (102) wenigstens zwei Träger (114, 116) aufweist, die in einer Längsrichtung (L) der Verpackungsanlage (102) in einem vorbestimmten Abstand voneinander angeordnet sind.

8. Kombination nach einem der Ansprüche 1 bis 7,
**dadurch gekennzeichnet, dass** die Verpackungsanlage (102) wenigstens einen in Höhenrichtung (H) abstehenden Justiervorsprung (140, 142) aufweist, der dazu ausgebildet und bestimmt ist, in dem betriebsmäßig kombinierten Zustand von Verpackungsanlage (102) und Funktionsvorrichtung (104) in eine zugeordnete Justierausnehmung (144a, 146a) der Funktionsvorrichtung (104) einzugreifen.

9. Kombination nach Anspruch 8,
**dadurch gekennzeichnet, dass** der Justiervorsprung oder wenigstens einer (140) der Justiervorsprünge an seinem freien Ende (140b) eine konische Ringfläche (140a) aufweist.

10. Kombination nach Anspruch 8 oder 9,
**dadurch gekennzeichnet, dass** der Justiervorsprung oder wenigstens einer (142) der Justiervorsprünge seinem Fußende (142b) benachbart eine konische Ringfläche (142a) aufweist.

11. Kombination nach einem der Ansprüche 8 bis 10,
**dadurch gekennzeichnet, dass** der Justiervorsprung oder wenigstens einer (142) der Justiervorsprünge mit einer, vorzugsweise pneumatisch betätigbaren, Spannvorrichtung (148) ausgestattet ist.

12. Kombination nach einem der Ansprüche 8 bis 11, sofern diese mittelbar oder unmittelbar auf den Anspruch 5 zurückbezogen sind,
**dadurch gekennzeichnet, dass** der Justiervorsprung (140, 142) oder wenigstens einer der Justiervorsprünge an dem Träger oder einem der Träger (116) angeordnet ist.
